# EUROPÄISCHE PATENTSCHRIFT

(11) **EP 3 365 854 B1**
(45) Veröffentlichungstag und Bekanntmachung des Hinweises auf die Patenterteilung: **16.06.2021**
(21) Anmeldenummer: 16784440.6
(22) Anmeldetag: 14.10.2016
(51) Int. Cl.: G06Q 20/10, G06Q 20/32

(54) **ELEKTRONISCHES BEZAHLVERFAHREN UND SERVERCOMPUTER**
ELECTRONIC PAYMENT METHOD AND SERVER COMPUTER
PROCÉDÉ DE PAIEMENT ÉLECTRONIQUE ET ORDINATEUR DE SERVEUR

(30) Priorität: 12.11.2015 DE 102015222347
(43) Veröffentlichungstag der Anmeldung: 29.08.2018
(73) Patentinhaber: Bundesdruckerei GmbH, 10969 Berlin (DE)
(72) Erfinder: RÜCKRIEMEN, Jörg, 10999 Berlin (DE)
(74) Vertreter: Richardt Patentanwälte PartG mbB
(86) Internationale Anmeldenummer: PCT/EP2016/074677
(87) Internationale Veröffentlichungsnummer: WO 2017/080752

(56) Entgegenhaltungen:
- WO-A2-00/67177
- US-A1- 2009 144 193
- US-A1- 2011 055 077
- US-A1- 2013 282 580
- US-A1- 2014 279 446
- US-A1- 2015 262 140
- US-B1- 8 751 379
- Yanislav Georgiev Malahov: "BitAlias I - BitAlias Decentralized Naming and Identity - Medium", , 7 June 2015 (2015-06-07), XP055629062, Retrieved from the Internet: URL:https://medium.com/bitalias-decentrali zed-naming-and-identity-service/bitalias-7 b66bffed9d8 [retrieved on 2019-10-04]
- Gessner ET AL: "Voice and SMS in LTE White Paper", , 10 May 2011 (2011-05-10), XP055425125, Retrieved from the Internet: URL:https://cdn.rohde-schwarz.com/pws/dl_d ownloads/dl_application/application_notes/ 1ma197/1MA197_1e_voice_and_SMS_in_LTE.pdf [retrieved on 2017-11-15]

## Beschreibung

Die vorliegende Erfindung betrifft ein elektronisches Bezahlverfahren, einen Servercomputer sowie ein Datenverarbeitungssystem zur Überweisung eines Betrags einer Kryptowährung von einem ersten Mobilfunkgerät zu einem Mobilfunkgerät.

Aus dem Stand der Technik sind an sich bereits verschiedene Kryptowährungen (sogenannte cryptocurrencies, vgl. https://en.wikipedia.org/wiki/Cryptocurrency) bekannt, insbesondere Bitcoin.

Bitcoin wurde im Jahre 2008 in einem White Paper unter dem Pseudonym Satosh Nakamoto erstmals beschrieben ("Bitcoin: Peer-to-Peer Electronic Cash System (https://bitcoin.org/bitcoin.pdf). Bitcoin.Org October 2008). Die verschiedenen Komponenten des Bitcoin-Netzwerks, einschließlich der Blockchain, sind unter anderem in "Mastering Bitcoin Unlocking Digital Cryto Currencies, Andreas N. Antonopoulos, O'Reilly Media, Inc., 2015, ISBN 978-1-449-37404-4 im Detail offenbart.

Neben Bitcoin sind bereits verschiedene weitere ähnliche Kryptowährungen bekannt, die zur Herstellung von Vertrauen ebenfalls die Blockchain Technologie (vgl. https://en.wikipedia.org/wiki/Block_chain_(database))verwenden, wie zum Beispiel Litecoin
Darüberhinaus gibt es Versuche die Blockchain für Anwendung ausserhalb des Bitcoin zu verwenden wie z. B. Ethereum, vergleiche http://en.wikipedia.org/wiki/ethereum.

US-Patentanmeldung US 2009/0144193 A1 beschreibt ein System und Verfahren zum Steuern eines Geldkontos mit einem oder mehreren Unterkonten. Ein Geldkonto wird bei einer Entität eingerichtet und ein Kontonutzer, der mit dem Geldkonto zugeordnet ist, wird identifiziert. Ein Unterkonto wird bei der Entität eingerichtet, wobei das Unterkonto dem Geldkonto zugeordnet ist und Geldmittel enthält, die vom Geldkonto überwiesen werden. Mindestens ein Unterkontonutzer, der dem Unterkonto zugeordnet ist, wird identifiziert, wobei sich der mindestens eine Unterkontonutzer von dem Kontonutzer unterscheidet. Ein oder mehrere Steuerelemente, die bei dem Kontonutzer angeordnet sind, werden für mindestens eines der Unterkonten und den mindestens einen Unterkontonutzer eingerichtet. Der mindestens eine Nutzer des Unterkontos hat keinen Zugriff auf Geldmittel im Geldkonto und der Nutzer des Kontos darf auf das Unterkonto zugreifen.

US-Patentanmeldung US 2015/0262140 A1 zeigt ein Verfahren zum Senden von Bitcoins an eine E-Mail-Adresse. Dieses Verfahren setzt voraus, dass sowohl der Sender als auch der Empfänger der Bitcoins zum Zeitpunkt des Starts der Transaktion jeweils über eine installierte Wallet verfügen.

Die US 2013/0282580 A1 beschreibt ein Netzwerk von Registern, die ganz oder teilweise mit einem Root-Register synchronisiert sind und die Zusammenstellungen von Registrantendaten von akkreditierten Identitätsanbietern sind, die für die Registrierung verifizierter und korrekter Identitätsattribute haften. Register verknüpfen eine eindeutige Kennung mit persönlichen identifizierenden Informationen eines Finanzkontoinhabers, einer oder mehreren öffentlich auffindbaren elektronischen Zahlungsadressen, die mit einem Konto bei einem Finanzinstitut verknüpft sind, und ein Profil von Präferenzen eines Finanzkontoinhabers in Bezug auf eine Erfassung, Verarbeitung, Übertragung und Speicherung von Geld- und Informationsgütern. Präferenzerweiterungen umfassen: Betriebsinstruktionen und Regelsätze und Authentifizierungsfaktoren, die zeitkritische Daten bei einer oder mehreren Institutionen verwenden können.

Der Artikel "BitAlias I - BitAlias Decentralized Naming and Identity-Medium" von Yanislav Georgiev Malahov vom 7. Juni 2015 (https://medium.com/bitaliasdecentralized-naming-and-identity-service/bitalias-7b66bffed9d8) beschreibt BitAlias, ein Protokoll und eine Open-Source-Implementierung, welche ein Registrieren von Alias für Bitcoin-Adressen ermöglicht.

Der Erfindung liegt demgegenüber die Aufgabe zugrunde, ein verbessertes elektronisches Bezahlverfahren zur Überweisung eines Betrags einer Kryptowährung von einem Mobilfunkgerät zu einem Mobilfunkgerät zu schaffen sowie einen entsprechenden Servercomputer und ein entsprechendes Datenverarbeitungssystem.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Unter einem "Mobilfunkgerät" wird hier ein tragbares elektronisches Gerät mit einer sogenannten Luftschnittstelle zu einem digitalen zellularen Mobilfunknetzwerk verstanden, welches nach einem Mobilfunkstandard aufgebaut ist, in dem ein Senden von Nachrichten über einen Signalisierungslayer des Mobilfunknetzwerks vorgesehen ist. Bei dem Mobilfunkgerät kann es sich insbesondere um ein batteriebetriebenes Endgerät, wie zum Beispiel ein sogenanntes Handy, insbesondere ein Smartphone, einen Tablet-, Notebook- oder Laptop-Computer handeln. Insbesondere kann das Mobilfunkgerät ein Betriebssystem wie zum Beispiel Android, Apple iOS oder Windows aufweisen, welches zur Installation von Anwendungsprogrammen, sogenannten Apps, ausgebildet ist.

Unter einem "Wallet-Programm" oder kurz "Wallet" wird hier ein Programm, insbesondere eine App, zur Verfügungstellung einer persönlichen digitalen Brieftasche in der Kryptowährung verstanden, durch welche ein Client Node der Kryptowährung gebildet wird; vergleiche auch "Mastering Bitcoins", Quick Glossary XXI. sowie Kapitel 4, insbesondere Seiten 86 bis 98. Wallets können i.a. Zieladressen erzeugen. Das Signieren ist eine bekannte Standardfunktion von Wallets zum Schutz von Adressen und zur Identifizierung von Wallets.

Unter einem "Client Node" der Kryptowährung wird hier ein elektronisches Gerät verstanden, beispielsweise ein Mobilfunkgerät oder ein Servercomputer, der an das Internet angeschlossen ist und Transaktionsnachrichten erzeugen und senden und/oder von anderen Client Nodes empfangen kann, um hierdurch Zahlungen zu leisten bzw. entgegenzunehmen. Insbesondere handelt es sich bei einem Mobilfunkgerät mit einem darauf installierten Wallet-Programm um einen solchen Client Node.

Unter einem "Mining-Node" der Kryptowährung wird ein sogenannter Miner verstanden, der zu Validierung von Transaktionen und zur Fortschreibung der Blockchain dient. Ein Mining-Node empfängt von den Client Nodes Transaktionsnachrichten, um diese in einem zeitlichen Wettbewerb mit den anderen Mining Nodes der Kryptowährung zu validieren. Der erste Mining Node, dem die Validierung einer Transaktionsnachricht gelingt, erzeugt einen weiteren Block der Blockchain und signalisiert dies an die anderen Mining Nodes, vergleiche hierzu auch "Mastering Bitcoin", Chapter VIII, Mining and Consensus, Seite 175 ff.

Unter einer "Blockchain" wird hier eine geordnete Datenstruktur verstanden, wobei jeder Block der Blockchain durch einen Hash-Wert identifiziert wird und einen Vorgängerblock in der Blockchain referenziert, vergleiche https://en.wikipedia.org/wiki/Block_chain_(database) und "Mastering Bitcoin", Chapter 7, The Blockchain, Seite 161 ff.

Unter einer "Transaktionsnachricht" wird hier eine Nachricht verstanden, in der eine Transaktion zur Überweisung eines Betrags der Kryptowährung spezifiziert ist, vergleiche "Mastering Bitcoin", Seiten 16 - 25, insbesondere auf Seite 25 der Abschnitt "How it propagates".

Unter einer "Zieladresse" wird hier eine Adresse verstanden, nämlich die sogenannte "Destination Adress", durch die der Zahlungsempfänger des zu überweisenden Betrags festgelegt wird; vergleiche "Mastering Bitcoin", Seite 17 sowie Kapitel Bitcoin Addresses, Seiten 70 - 72. Zur Generierung einer Zieladresse wird durch das Wallet-Programm des Teilnehmers, der Zahlungen empfangen möchte, ein asymmetrisches kryptografisches Schlüsselpaar bestehend aus einem öffentlichen Schlüssel und einem privaten Schlüssel erzeugt. Durch Bildung eines Hash-Werts aus dem öffentlichen Schlüssel wird dann eine Zieladresse generiert.

Unter einem "Servercomputer" wird hier ein Computer verstanden, der an das Internet angeschlossen ist, und als Client Node der Kryptowährung ausgebildet ist. Bei dem Servercomputer kann es sich um einen virtuellen Server, einen einzelnen Computer oder ein verteiltes Computersystem handeln.

Unter einem "Prozessor" wird hier ein Mikroprozessor oder ein Mikroprozessorsystem aus mehreren Prozessorkernen und/oder mehreren Mikroprozessoren verstanden.

Nach Ausführungsformen der Erfindung sendet ein erster Teilnehmer A zur Überweisung eines Betrags an einen zweiten Teilnehmer B zunächst eine Nachricht von seinem Mobilfunkgerät an einen Servercomputer über das Internet, wobei die Nachricht erste und zweite Telefonnummern beinhaltet, nämlich die dem ersten Mobilfunkgerät des A bzw. einem zweiten Mobiltelefon des zweiten Teilnehmers B zugeordneten Telefonnummern A bzw. B.

Beispielsweise gibt der Teilnehmer A hierzu in das Wallet-Programm seines ersten Mobilfunkgeräts die zweite Telefonnummer B, das heißt die Telefonnummer des Teilnehmers B, ein, was manuell oder durch Auswahl des Teilnehmers B aus bereits gespeicherten Kontakten, erfolgen kann, woraufhin das Wallet-Programm die Nachricht mit den ersten und zweiten Telefonnummern erzeugt und an den Servercomputer sendet, der beispielsweise durch eine URL identifiziert wird, die zum Beispiel in einer Konfigurationsdatei des Wallet-Programms gespeichert sein kann.

Aufgrund des Erhalts der Nachricht führt der Servercomputer eine Datenbankabfrage einer Registrierungsdatenbank durch, auf die der Servercomputer Zugriff hat. Hierbei dient die zweite Telefonnummer B des zweiten Teilnehmers B als Zugriffsschlüssel, um zu prüfen, ob der zweite Teilnehmer B bereits in der Registrierungsdatenbank registriert ist, das heißt, ob unter der zweiten Telefonnummer eine Eintragung in der Registrierungsdatenbank vorhanden ist.

Für den Fall, dass der zweite Teilnehmer B noch nicht registriert ist, wird wie folgt vorgegangen:
i. der Servercomputer erzeugt eine Zieladresse ("Destination Address"), indem er ein asymmetrisches kryptografisches Schlüsselpaar generiert und dann aus dem erhaltenen öffentlichen Schlüssel eine Zieladresse mittels einer Hash-Funktion ableitet. Diese Zieladresse des Servercomputers sendet der Servercomputer an das erste Mobilfunkgerät als Antwort auf die zuvor von dem ersten Mobilfunkgerät empfangene Nachricht.
   Ausführungsformen der Erfindung sind besonders vorteilhaft, wenn die Erzeugung der Zieladresse durch den Servercomputer nicht erst aufgrund des Empfangs der Nachricht und der fehlgegangenen Prüfung der Registrierung des zweiten Teilnehmers erzeugt wird, sondern Zieladressen auf Vorrat in einem Pufferspeicher des Servercomputers gespeichert sind, sodass zur Beantwortung der Nachricht des ersten Mobilfunkgeräts der Servercomputer lediglich eine der Zieladressen aus dem Pufferspeicher entnimmt und diese dann sendet, ohne die Zieladresse dann erst generieren zu müssen. Auf diese Art und Weise wird die Latenzzeit zur Beantwortung der Nachricht des ersten Mobilfunkgeräts verkürzt.
ii. Nachdem das erste Mobilfunkgerät die Zieladresse von dem Servercomputer empfangen hat, erzeugt das erste Mobilfunkgerät eine Transaktionsnachricht, in der eine Transaktion zur Überweisung des Betrags der Kryptowährung an den Servercomputer durch Angabe von dessen Zieladresse spezifiziert ist. Da der Teilnehmer B nicht auf dem Servercomputer registriert ist, erfolgt also zunächst eine Überweisung des Betrags an den Servercomputer und nicht unmittelbar an den Teilnehmer B.
iii. Hierzu wird diese von dem ersten Mobilfunkgerät, das heißt dessen Wallet-Programm, erzeugte Transaktionsnachricht von dem ersten Mobilfunkgerät als Broadcast an die Nodes der Kryptowährung über das Internet versendet, sodass sowohl die Client Nodes, einschließlich des Servercomputers, als auch die Miner Nodes die Transaktionsnachricht empfangen können.
iv. Die Transaktionsnachricht, das heißt die darin spezifizierte Transaktion, wird dann durch die Mining Nodes validiert, und zwar mithilfe einer Blockchain. Hierzu kann wie an sich bekannt vorgegangen werden, indem nämlich die Mining Nodes in einem zeitlichen Wettbewerb für die Validierung eintreten und derjenige Mining Node, der als erster eine Validierung hat durchführen können, einen weiteren Block der Blockchain generiert und dies den anderen Mining Nodes und auch den Client Nodes über das Internet signalisiert.
   Nach der erfolgreichen Validierung der Transaktion hat der Servercomputer somit den an den Teilnehmer B zu überweisenden Betrag der Kryptowährung von dem Teilnehmer A empfangen.
v. Der Servercomputer generiert daraufhin eine Nachricht für den Teilnehmer B, der über seine zweite Telefonnummer B, die der Servercomputer von dem Teilnehmer A empfangen hat, identifiziert ist. Diese Nachricht sendet der Servercomputer über einen Signalisierungslayer des Mobilfunknetzwerks an das zweite Mobilfunkgerät, um den zweiten Teilnehmer B zur Registrierung aufzufordern.
   Insbesondere kann die Nachricht als SMS an die zweite Telefonnummer gesendet werden. Die Nachricht kann einen Link zu einem sogenannten Appstore beinhalten, durch den auf das Wallet-Programm in dem Appstore verwiesen wird. Nach dem Empfang der SMS braucht der zweite Teilnehmer B dann lediglich diesen Link zu selektieren, um das Wallet-Programm aus dem Appstore auf sein zweites Mobilfunkgerät über das Internet herunterzuladen und auf seinem zweiten Mobilfunkgerät zu installieren. Dies kann auch vollautomatisch ohne Zutun des Teilnehmers B erfolgen, insbesondere dann, wenn es sich bei der SMS um eine binary SMS handelt, die von dem Prozessor der SIM Karte des zweiten Mobilfunkgeräts ausführbar ist.
vi. Aufgrund des Empfangs der Nachricht in dem Schritt v. installiert der Nutzer das Wallet-Programm auf seinem zweiten Mobilfunkgerät. Alternativ erfolgt dies vollautomatisch, wobei vorgesehen sein kann, dass der Nutzer hierzu seine Zustimmung in das zweite Mobilfunkgerät eingeben muss.
vii. Das Wallet-Programm erzeugt dann zumindest eine Zieladresse für das zweite Mobilfunkgerät. Es können auch gleich mehrere Zieladressen für das zweite Mobilfunkgerät auf Vorrat erzeugt werden.
viii. Eine oder mehrere der von dem Wallet-Programm in dem vorhergehenden Schritt erzeugten Zieladressen werden dann von dem zweiten Mobilfunkgerät an den Servercomputer gesendet, wobei der Servercomputer wiederum durch eine URL identifiziert sein kann, die beispielsweise als Konfigurationsdatei in dem Wallet-Programm gespeichert ist und welche durch das Herunterladen und die Installation des Wallet-Programms zu dem zweiten Mobilfunkgerät kommuniziert worden ist. Die Versendung der einen oder mehreren Zieladressen von dem zweiten Mobilfunkgerät an den Servercomputer kann über das Internet mittels TCP/IP erfolgen. Diese Zieladressen können vom Wallet signiert sein.
ix. Aufgrund des Empfangs der zumindest einen Zieladresse von dem zweiten Mobilfunkgerät kann nunmehr der Servercomputer den zuvor von dem Teilnehmer A empfangenen Betrag an den Teilnehmer B weiterleiten. Hierzu erzeugt der Servercomputer eine weitere Transaktionsnachricht, indem eine der Zieladressen des zweiten Mobilfunkgeräts und der zuvor von dem Teilnehmer A empfangene Betrag spezifiziert sind.
x. Diese weitere Transaktionsnachricht wird dann von dem Servercomputer als Broadcast gesendet und von den Mining Nodes in einem zeitlichen Wettbewerb validiert, analog zu den oben genannten Schritten iii. und iv. Auf diese Art und Weise erhält der Teilnehmer B den Betrag von dem Teilnehmer A.

Aufgrund der Beantwortung der in dem Schritt v. von dem Servercomputer an das zweite Mobilfunkgerät gesendeten Nachricht durch Senden einer oder mehrerer Zieladressen des zweiten Mobilfunkgeräts kann der Servercomputer ferner die Registrierung des Teilnehmers B in der Registrierungsdatenbank vornehmen. Hierzu wird ein Eintrag in der Registrierungsdatenbank mit der zweiten Telefonnummer B, die der Servercomputer von dem Teilnehmer A empfangen hatte, erzeugt.

Die von dem zweiten Teilnehmer B empfangenen Zieladressen können beispielsweise in einem Pufferspeicher des Servercomputers gespeichert werden und dem für den Teilnehmer B in der Registrierungsdatenbank erzeugten Eintrag zugeordnet werden. Insbesondere kann die Registrierungsdatenbank selbst als Pufferspeicher dienen.

Wenn nachfolgend der Teilnehmer A eine weitere Überweisung an den Teilnehmer B vornehmen möchte, wird abweichend von den oben genannten Schritten i. bis x. wie folgt vorgegangen:
- Die von dem ersten Mobilfunkgerät empfangene Nachricht, die die ersten und zweiten Telefonnummern beinhaltet, wird von dem Servercomputer dadurch beantwortet, dass der Servercomputer eine Zieladresse des zweiten Mobilfunkgeräts des Teilnehmers B an das erste Mobilfunkgerät des Teilnehmers A sendet.
- Das erste Mobilfunkgerät generiert daraufhin eine Transaktionsnachricht mit der von dem Server empfangenen Zieladresse des Teilnehmers B.
- Durch Senden und Validierung der Transaktionsnachricht analog zu den oben genannten Schritten iii und iv erfolgt die Überweisung des Betrags dann unmittelbar von dem Teilnehmer A an den Teilnehmer B.

Ausführungsformen der Erfindung sind besonders vorteilhaft, da eine Überweisung eines Betrags einer Kryptowährung von einem ersten Teilnehmer A, der bereits registriert ist, an einen zweiten Teilnehmer B, der noch nicht registriert ist und der noch kein Wallet-Programm auf seinem Mobilfunkgerät installiert hat, auf bequeme und sichere Art und Weise ermöglicht wird.

Ausführungsformen der Erfindung sind besonders vorteilhaft, da der Servercomputer außer der Telefonnummer und den beschriebenen Empfangsadressen keine persönliche Information speichern muss.

Ausführungsformen der Erfindung sind besonders vorteilhaft, da durch das Signieren der Adressen abgesichert werden kann, dass ein betrügerischer Austausch von Adressen nicht stattfinden kann.

Der Teilnehmer A benötigt hierzu lediglich die Telefonnummer des Teilnehmers B und muss sich nicht darüber informieren, ob der Teilnehmer B bereits ein registrierter Teilnehmer der Kryptowährung ist. Der Teilnehmer A kann unabhängig davon, ob der Teilnehmer B bereits registriert ist, die Überweisung vornehmen, da er in die weiteren Schritte, die in Abhängigkeit davon ablaufen, ob der Teilnehmer B bereits registriert ist oder nicht, nicht involviert ist, da diese Schritte von dem Servercomputer und dem Teilnehmer B bzw. dessen Mobilfunkgerät durchgeführt werden. Mit anderen Worten ist der Handhabungsaufwand des Teilnehmers A zur Überweisung eines Betrags an den Teilnehmer B unabhängig davon, ob der Teilnehmer B bereits registriert ist.

Ausführungsformen der Erfindung sind besonders vorteilhaft, wenn das auf dem ersten Mobilfunkgerät des Teilnehmers A installierte Wallet-Programm auf von dem Teilnehmer A bereits gespeicherte Kontakte, wie zum Beispiel Outlook-Kontakte, zugreifen kann, in denen die Namen und Telefonnummern von potenziellen Teilnehmern B gespeichert sind, an die A eine Überweisung tätigen könnte. Zur Initiierung einer Überweisung muss dann der Teilnehmer A über eine Nutzerschnittstelle seines Mobilfunkgeräts lediglich einen der Kontakte, zum Beispiel durch Eingabe des Namens des Teilnehmers B, selektieren, sodass die entsprechende Telefonnummer des selektierten Teilnehmers B von dem Wallet-Programm aus dem betreffenden Kontakt ausgelesen wird, um damit die Nachricht, die die ersten und zweiten Telefonnummern beinhaltet, zu generieren.

Nach Ausführungsformen der Erfindung hat der Servercomputer einen Pufferspeicher zur Speicherung mehrerer der Zieladressen des Servercomputers sowie einen Adressgenerator zur Generierung der Zieladressen. Der Adressgenerator generiert initial eine Anzahl von n der Zieladressen des Servercomputers; diese werden in dem Pufferspeicher gespeichert. Aufgrund des Empfangs von Nachrichten, beispielsweise von dem Teilnehmer A, die Telefonnummern von nicht-registrierten Teilnehmern B beinhalten, werden die Zieladressen aus dem Pufferspeicher verbraucht - es soll ja jede Zieladresse nur für eine Transaktion und nicht mehrfach verwendet werden. Sobald die verbleibende Anzahl von Zieladressen in dem Pufferspeicher einen Schwellwert unterschreitet, wird der Adressgenerator gestartet, um weitere Zieladressen zu generieren, mit denen dann der Pufferspeicher wieder aufgefüllt wird.

Dies hat den Vorteil, dass für den Fall, dass eine Nachricht von beispielsweise dem Teilnehmer A bezüglich eines noch nicht registrierten Teilnehmers B empfangen wird, der Servercomputer daraufhin nicht erst eine Zieladresse generieren muss, sondern eine Zieladresse durch Zugriff auf den Pufferspeicher zur Verfügung hat, die dann unmittelbar an den Teilnehmer A gesendet werden kann. Da die Zieladresse bereits vorliegt und nicht erst generiert werden muss, ist die entsprechende Latenzzeit kürzer.

Erfindungsgemäß werden in dem oben genannten Schritt vii mehrere Zieladressen, beispielsweise eine Anzahl von n Zieladressen, durch das von dem Teilnehmer B installierte Wallet-Programm erzeugt und in dem Schritt viii an den Servercomputer übertragen. Diese Zieladressen werden dann im Rahmen der Registrierung des Teilnehmers B in der Registrierungsdatenbank von dem Servercomputer gespeichert.

Erhält der Servercomputer nachfolgend eine weitere Nachricht von zum Beispiel den Teilnehmer A, kann der Servercomputer darauf mit einer der gepufferten Zieladressen des Teilnehmers B antworten, ohne dass eine solche Zieladresse zunächst vor dem Servercomputer C bei dem zweiten Mobilfunkgerät des Teilnehmers B nachgefragt werden müsste. Auch hierdurch reduziert sich die Latenzzeit.

Wenn die Anzahl der für den Teilnehmer B auf dem Servercomputer gepufferten Zieladressen einen Schwellwert unterschreitet, so sendet der Servercomputer an das zweite Mobilfunkgerät des Teilnehmers B eine entsprechende Nachricht, um weitere Zieladressen von B anzufordern, um den Pufferspeicher für B auf dem Servercomputer wieder aufzufüllen. Entsprechendes gilt für den Teilnehmer A, der ebenfalls die Rolle des Zahlungsempfängers einnehmen kann.

Nach einer Ausführungsform der Erfindung wird es ermöglicht, dass der noch nicht registrierte Teilnehmer B den Erhalt der Zahlung in der Kryptowährung von dem Teilnehmer A ablehnen kann, was zum Beispiel bei Bitcoins oder anderen Blockchain-basierten Kryptowährungen nicht möglich ist.

Wenn der Teilnehmer B die Nachricht, die der Servercomputer in dem Schritt v sendet, zum Beispiel aus technischen Gründen nicht empfangen kann oder die Nachricht zwar empfangen hat, aber keine Registrierung und/oder den Empfang von Zahlung in der Kryptowährung wünscht, so antwortet der Teilnehmer B nicht auf die Nachricht, so dass also die Schritte vi bis viii nicht durchgeführt werden.

Nach Ausführungsformen der Erfindung startet der Servercomputer mit dem Senden der Nachricht in dem Schritt v. einen Timer. Erhält der Servercomputer von dem zweiten Mobilfunkgerät vor Ablauf des Timers keine Antwort, also insbesondere keine Zieladresse des Teilnehmers B, so initiiert der Servercomputer daraufhin eine Rücküberweisung des von Teilnehmer A erhaltenen Betrags an den Teilnehmer A. Da der Teilnehmer A bereits registriert ist, muss der Servercomputer hierzu lediglich eine Zieladresse des Teilnehmers A aus dem dem Teilnehmer A zugeordneten Pufferspeicher des Servercomputers auslesen, um damit eine Transaktionsnachricht zur Überweisung des Betrags an A zu generieren.

In einem weiteren Aspekt betrifft die Erfindung einen entsprechenden Servercomputer, der zur Verwendung in einer Ausführungsform des erfindungsgemäß elektronischen Bezahlverfahrens konfiguriert ist.

In einem weiteren Aspekt betrifft die Erfindung ein Datenverarbeitungssystem, welches zumindest die ersten und zweiten Mobilfunkgeräte sowie eine Ausführungsform des erfindungsgemäßen Servercomputers beinhaltet.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Datenverarbeitungssystems,
- Figur 2: das Blockdiagramm gemäß der Ausführungsform gemäß Figur 1 nachdem der Teilnehmer B registriert worden ist.

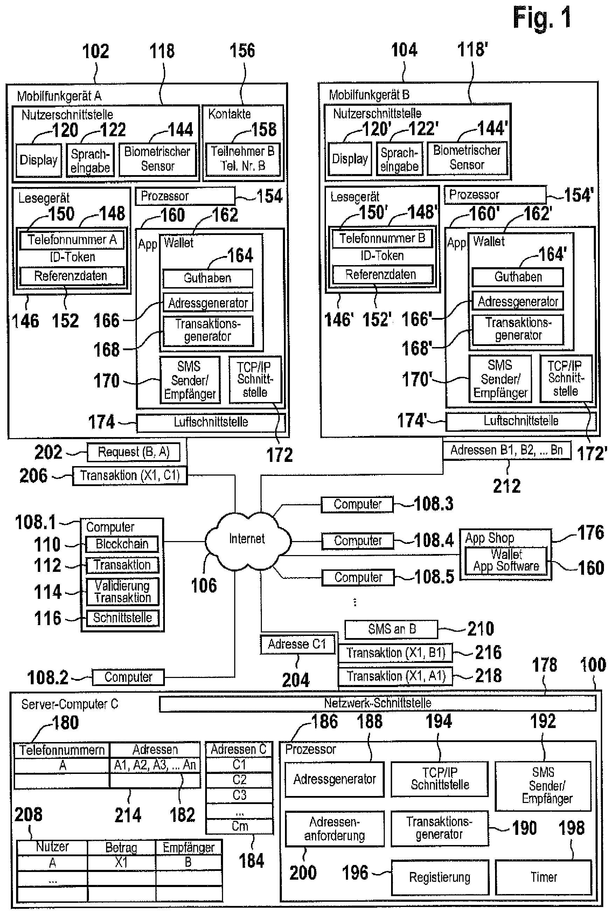

Die Figur 1 zeigt ein Datenverarbeitungssystem mit einem Servercomputer 100, der nachfolgend auch als "C" bezeichnet wird. Zu dem Datenverarbeitungssystem gehören Mobilfunkgeräte, insbesondere exemplarisch die Mobilfunkgeräte 102 des Teilnehmers A und 104 des Teilnehmers B.

Zumindest durch das Mobilfunkgerät 102 des Teilnehmers A und durch den Servercomputer 100 werden Client Nodes einer Kryptowährung gebildet, die über das Internet 106 miteinander kommunizieren können. Zu dem Netzwerk der Kryptowährung gehören ferner mehrere Mining Nodes 108, von denen die Mining Nodes 108.1 bis 108.5 exemplarisch in der Figur 1 gezeigt sind. Jeder der Mining Nodes 108 wird durch einen Computer implementiert, der an das Internet 106 angeschlossen ist.
Die Figur 1 zeigt exemplarisch den Mining Node 108.1 in einer detaillierteren Ansicht. Der Mining Node 108.1 ist dazu ausgebildet, Transaktionsnachricht von den Client Nodes über das Internet 106 zu empfangen, die Transaktionen zur Überweisung von Beträgen der Kryptowährung spezifizieren. Solch Transaktionsnachrichten werden als Broadcast von einem Client Node an alle anderen Nodes, einschließlich der Client Nodes und Mining Nodes des Netzwerks der Kryptowährung gesendet. Der Mining Node 108.1 hat eine Kommunikationsschnittstelle 116 zum Anschluss des Mining Nodes 108.1 an das Internet 106.

Empfängt beispielsweise der Mining Node 108.1 eine Transaktionsnachricht, die eine Transaktion 112 spezifiziert, so wird durch Ausführung eines Programmmoduls 114 mithilfe der Blockchain 110 die Validität der Transaktion 112 geprüft, wobei dies in einem zeitlichen Wettbewerb mit den anderen Mining Nodes 108 erfolgt, die im Prinzip gleich aufgebaut sind.

Derjenige der Mining Nodes 108, welcher als erster die Transaktion 112 validieren kann, gewinnt den zeitlichen Wettbewerb und erzeugt einen weiteren Block der Blockchain 110. Dies signalisiert der obsiegende Mining Node, beispielsweise der Mining Node 108.1, an alle anderen Nodes des Netzwerks der Kryptowährung. Der Aufbau der Blockchain sowie die Funktionalität der Mining Nodes können dabei analog zu dem Bitcoin-Netzwerk sein, wie beispielsweise in "Mastering Bitcoin" beschrieben.

Das Mobilfunkgerät 102 des Nutzers A hat eine Nutzerschnittstelle 118, das heißt ein sogenanntes User-Interface, welches beispielsweise ein Display 120, insbesondere ein berührungsempfindliches Display, das heißt ein sogenanntes Touchpanel, aufweist sowie beispielsweise ein Spracheingabemodul 122 zur Eingabe von natürlichsprachlichen Kommandos und einen biometrischen Sensor 144. Beispielsweise kann der biometrische Sensor 144 für eine biometrische Authentifizierung des Nutzers gegenüber dem Mobilfunkgerät 102 dienen als Alternative oder zusätzlich zu einer Authentifizierung mittels einer PIN.

Das Mobilfunkgerät 102 hat ferner ein Lesegerät 146, welches einen integralen Bestandteil des Mobilfunkgeräts 102 bilden kann. Das Lesegerät 146 dient zur Kommunikation mit einem ID-Token 148, bei dem es sich beispielsweise um eine SIM-Karte oder ein elektronisches Ausweisdokument, wie zum Beispiel einen elektronischen Personalausweis handelt, zu letzterem vergleiche WO 2010/145979 A1.

Beispielsweise sind in dem ID-Token 148 eine Telefonnummer, in diesem Fall die Telefonnummer A des Teilnehmers A, in einem sicheren Speicherbereich 150 gespeichert, auf den nur ein Prozessor des ID-Tokens 148 zugreifen kann sowie Referenzdaten, die in einem weiteren sicheren Speicherbereich 152 gespeichert sind. Die Referenzdaten dienen dabei zur Authentifizierung des Nutzers A gegenüber dem Mobilfunkgerät 102 mit dem in dem Lesegerät 146 befindlichen ID-Token 148.

Beispielsweise gibt der Nutzer A zu seiner Authentifizierung gegenüber dem Mobilfunkgerät 102 seine PIN über das Display 120 ein. Die eingegebene PIN wird dann auf Übereinstimmung mit den in dem Speicherbereich 152 gespeicherten Referenzdaten durch den Prozessor des ID-Tokens geprüft. Der Prozessor gibt im Falle einer Übereinstimmung ein Freigabesignal ab, sodass anschließend die Funktionen des Mobilfunkgeräts 102 von dem Nutzer A genutzt werden können.

Das Mobilfunkgerät 102 hat einen Prozessor 154, der zur Ausführung verschiedener Anwendungsprogramme dient, die auf dem Mobilfunkgerät 102 installiert sein können. Hierzu kann ein Anwendungsprogramm 156 gehören, welches zur Speicherung von Kontakten, beispielsweise des Kontakts 158, dient sowie zur Auswahl eines Kontakts, beispielsweise um einen Anruf zu dem entsprechenden Teilnehmer zu tätigen oder eine SMS zu senden.

In der hier betrachteten Ausführungsform ist eine Wallet-App 160 auf dem Mobilfunkgerät 102 installiert, das heißt eine App, durch die eine digitale Wallet 162 für den Nutzer A zur Verfügung gestellt wird. Die Wallet 162 dient zur Speicherung von Daten 164, durch die eine Geldmenge einer Kryptowährung spezifiziert ist, die dem Teilnehmer A gehört. Die Wallet 162 hat ferner einen Adressgenerator 166 zur Generierung von Zieladressen des Mobilfunkgeräts 102 sowie einen Transaktionsgenerator 168 zur Generierung von Transaktionsnachrichten.

Die Wallet-App 160 hat ferner ein Schnittstelle 170 zumindest zum Senden von SMS-Nachrichten und ein Schnittstelle 172 zum Senden und Empfangen von Nachrichten über das Internet 106 nach dem TCP/IP-Protokoll. Das Mobilfunkgerät 102 hat ferner eine Luftschnittstelle 174, das heißt ein sogenanntes Air-Interface, zur Verbindung des Mobilfunkgeräts 102 mit einem digitalen zellulären Mobilfunknetzwerk, über welches das Mobilfunkgerät 102 auch über das Internet 106 kommunizieren kann.

Das Mobilfunkgerät 104 des Teilnehmers B ist prinzipiell gleich aufgebaut wie das Mobilfunkgerät 102, wobei nicht dieselben Apps auf dem Mobilfunkgerät 104 installiert sein müssen. Insbesondere ist auf dem Mobilfunkgerät 104 zunächst keine Instanz der Wallet-App 160 installiert. Die Elemente des Mobilfunkgeräts 104, die Elemente des Mobilfunkgeräts 102 entsprechen, werden im Weiteren mit denselben Bezugszeichen, die um ein Apostroph ergänzt sind, gekennzeichnet.

Die Wallet-App 160 steht als Wallet-App Software in einem App-Shop 176 zum Download über das Internet 106 zur Verfügung. Der App-Shop 176 und die darin befindliche Wallet-App 160 können durch eine URL spezifiziert sein, sodass zur Installation der Wallet-App 160 zum Beispiel auf dem Mobilfunkgerät 104 lediglich diese URL der Wallet-App 160 auf dem Mobilfunkgerät 104 selektiert werden muss, um eine Instanz 160' der Wallet-App dort zu installieren.

Der Servercomputer 100 hat eine Netzwerkschnittstelle 178 zur Verbindung des Servercomputers 100 mit dem Internet 106. Der Servercomputer 100 hat ferner eine Registrierungsdatenbank 180, in der beispielsweise der Teilnehmer A registriert ist, indem die Telefonnummer A dieses Teilnehmers A dort eingetragen ist. Der Telefonnummer A ist eine Anzahl von n Zieladressen A1 bis An zugeordnet, die in einem Pufferspeicher 182 des Servercomputers 100 gespeichert sind. Hierbei handelt es sich um Zieladressen des Mobilfunkgeräts 102.

Die Telefonnummer B des Teilnehmers B ist in der Registrierungsdatenbank 180 zunächst nicht gespeichert, da der Teilnehmer B noch nicht registriert ist.

Der Servercomputer 100 hat ferner einen Pufferspeicher 184, in dem eine Anzahl von m Zieladressen C1 bis Cm des Servercomputers 100 gespeichert sind.

Der Servercomputer 100 hat einen Prozessor 186 zur Ausführung eines Adressgenerators 188 für die Erzeugung der Zieladressen des Servercomputers 100, die in dem Pufferspeicher 184 gespeichert werden. Der Prozessor 186 dient ferner zur Ausführung eines Transaktionsgenerators 190, der analog zu dem Transaktionsgenerator 168 für die Generierung von Transaktionen ausgebildet ist sowie von Modulen 192 und 194 analog zu den Modulen 170 bzw. 172 des Mobilfunkgeräts 102.

Der Prozessor 186 dient ferner zur Ausführung eines Programmmoduls 196, welches zur Registrierung eines weiteren Teilnehmers, beispielsweise des Teilnehmers B, ausgebildet ist. Das Programmmodul 196 kann einen Timer 198 starten. Ein weiteres Programmmodul 200 dient zur Anforderung von Zieladressen von den Teilnehmern.

Zur Überweisung eines Betrags einer Kryptowährung von dem Guthaben des Teilnehmers A an den Teilnehmer B wird beispielsweise wie folgt vorgegangen:
a) Der Teilnehmer A startet die auf dem Mobilfunkgerät 102 installierte Wallet-App 160 und gibt dort den zu überweisenden Betrag, beispielsweise den Betrag X1, ein. Ferner spezifiziert der Teilnehmer A, an welchem anderen Teilnehmer, hier den Teilnehmer B, der Betrag X1 überwiesen werden soll. Dies kann dadurch erfolgen, dass der Teilnehmer A die Telefonnummer B des Teilnehmers B manuell oder per Spracheingabe in die Wallet-App 160 eingibt. Alternativ kann der Teilnehmer A das Anwendungsprogramm 156 aufrufen, um den Kontakt 158 des Teilnehmers B auszuwählen, in dem die Telefonnummer B gespeichert ist. Durch Auswahl dieses Kontakts 158 wird die dort gespeicherte Telefonnummer B an die Wallet-App 160 übergeben.
   Die Wallet-App 160 erzeugt dann eine Nachricht 202, die die Telefonnummern B und A beinhaltet, das heißt "Request (B, A)". Diese Nachricht 102 sendet die Wallet-App 160 über das Internet 106 an den Servercomputer 100.
b) Der Servercomputer 100 führt daraufhin mit der Telefonnummer B als Zugriffsschlüssel einen Datenbankzugriff auf die Registrierungsdatenbank 180 durch, welcher ins Leere geht, da eine Registrierung des Teilnehmers B bisher nicht erfolgt ist.
c) Da hier der Fall vorliegt, dass der Teilnehmer B noch nicht registriert ist, werden nun die folgenden Schritte durchgeführt:
   i. Der Servercomputer 100 antwortet auf die Nachricht 202, indem er aus dem Pufferspeicher 184 die nächste seiner Zieladressen, hier C1, ausliest und diese Zieladresse als Antwort 204 auf die Nachricht 202 an das Mobilfunkgerät 102 sendet.
   ii. Durch den Transaktionsgenerator 168 wird daraufhin eine Transaktionsnachricht 206 generiert, welche eine Transaktion zur Überweisung des Betrags X1 an den Servercomputer 100 spezifiziert, indem die Adresse C1 als Zieladresse für die Transaktion verwendet wird.
   iii. Die Transaktionsnachricht 206 wird dann als Broadcast an die Nodes des Netzwerks der Kryptowährung gesendet, das heißt sowohl an die Client Nodes, einschließlich dem Servercomputer 100 und die Mining Nodes 108.
   iv. Die Mining Nodes versuchen dann die in der Transaktionsnachricht 206 spezifizierte Transaktion in einen zeitlichen Wettbewerb mit Hilfe der in dem jeweiligen Mining Node vorhandenen Instanz der Blockchain 110 zu validieren. Der erste der Mining Nodes 108, dem dies gelingt, erzeugt einen weiteren Block der Blockchain 110 und signalisiert die erfolgreiche Validierung an die anderen Nodes des Netzwerks der Kryptowährung. Nach erfolgreicher Validierung ist damit eine Überweisung des Betrags X1 von dem Mobilfunkgerät 102 an den Servercomputer 100 erfolgt. Der Servercomputer 100 speichert dies in einer Transaktionsdatenbank 208 ab, in der der von dem Nutzer A empfangene Betrag X1 und der von dem Nutzer A in der Nachricht 202 spezifizierte Empfänger B durch die jeweiligen Telefonnummern A bzw. B bestimmt sind.
   v. Nach dem Erhalt des Betrags X1 von dem Teilnehmer A, welcher für den Teilnehmer B bestimmt ist, durch den Servercomputer 100, wird durch das Programmmodul 196 die erforderliche Registrierung des Teilnehmers B eingeleitet, um den Betrag X1 an den Teilnehmer B weiterüberweisen zu können. Hierzu generiert das Programmmodul 196 eine Nachricht für den Teilnehmer B, um dem Teilnehmer B die erforderliche Registrierung mitzuteilen. Da von dem Teilnehmer B nur die Telefonnummer bekannt ist, wird diese Nachricht über einen Signalisierungslayer des Mobilfunknetzwerks von dem Servercomputer 100 gesendet, beispielsweise durch Erzeugung einer SMS 210 durch das Modul 192. Die SMS 210 kann eine textuelle Mitteilung an den Teilnehmer B beinhalten die ihn über die Geldsendung informiert und dazu auffordert, eine Instanz der Wallet-App 160' von dem App-Shop 176 zu laden. und auf seinem Mobilfunkgerät 104 zu installieren. Insbesondere kann die SMS 210 den Link auf die Wallet-App 160 in dem App-Shop 176 beinhalten, sodass der Teilnehmer B lediglich diesen Link selektieren muss, um den Installationsprozess zu starten.
      Alternativ kann es sich bei der SMS 210 auch um eine sogenannte binary SMS handeln, um eine vollautomatische Installation der Instanz 160' der Wallet-App auf dem Mobilfunkgerät 104 ohne Zutun des Teilnehmers B zu initiieren. Für die Zwecke der nachfolgenden Beschreibung wird jedoch davon ausgegangen, dass es sich bei der Nachricht 210 um eine SMS und nicht um eine binary SMS handelt,
   vi. Aufgrund des Empfangs der SMS 210 von dem Mobilfunkgerät 104 installiert der Teilnehmer B eine Instanz 160' der Wallet-App auf seinem Mobilfunkgerät 104, beispielsweise durch Herunterladen von dem App-Shop 176.
   vii. Der Adressgenerator 166' erzeugt dann eine Anzahl von n Zieladressen B1 bis Bn für das Mobilfunkgerät 104.
   viii. Diese Zieladressen werden dann mit einer Nachricht 212 von dem Mobilfunkgerät 104 über das Internet 106 an den Servercomputer 100 übertragen. Damit wird gleichzeitig das Einverständnis des Teilnehmers B für die Durchführung seiner Registrierung an den Servercomputer 100 kommuniziert.
      Durch das Programmmodul 196 wird dann eine Registrierung des Teilnehmers B in der Registrierungsdatenbank 180 vorgenommen, indem die Telefonnummer des Teilnehmers B dort eingetragen wird und die Zieladressen, die mit der Nachricht 212 empfangen worden sind, in einem Pufferspeicher 214 gespeichert und diesem Eintrag der Telefonnummer B in der Registrierungsdatenbank 180 zugeordnet werden.
   ix. Von dem Transaktionsgenerator 190 wird dann eine Transaktionsnachricht 216 generiert, die die Zieladresse B1 und den Betrag X1 beinhaltet, den der Transaktionsgenerator 190 aus der Transaktionsdatenbank 208 ausliest. Die Transaktionsnachricht 216 wird wiederum als Broadcast an die Nodes des Netzwerks der Kryptowährung über das Internet 106 gesendet (Schritt x), sodass - nach erfolgreicher Validierung - der Teilnehmer B damit den Betrag X1 erhält, was von den Daten 164' spezifiziert wird.
      Je nach Ausführungsform können bei diesen Überweisungen Gebühren anfallen, die von dem Betrag X1 durch einen der Mining Nodes 108 und/oder den Servercomputer 100 abgezogen werden, sodass nicht der volle Betrag X1 bei dem Teilnehmer B ankommt.
      Es kann jedoch auch sein, dass der Teilnehmer B aus technischen Gründen die SMS 210 nicht empfangen kann oder keine Installation der Wallet-App wünscht, weil er nicht in das Netzwerk der Kryptowährung aufgenommen werden möchte, und/oder weil er den Betrag nicht annehmen möchte. Für diesen Fall ist Folgendes vorgesehen:
      Durch Senden der SMS 210 wird der Timer 198 von dem Programmmodul 196 gestartet. Erfolgt vor Ablauf des Timers kein Empfang der Nachricht 212 durch den Servercomputer 100, so wird der Registrierungsvorgang für den Teilnehmer B abgebrochen und der Transaktionsgenerator 190 erzeugt eine weitere Transaktionsnachricht 218, um den in der Datenbank 208 für den Nutzer A gespeicherten Betrag X1 wieder an den Teilnehmer A zurückzuüberweisen. Hierzu verwendet der Transaktionsgenerator 190 die nächste Adresse A1 aus dem Pufferspeicher 182. Diese Transaktionsnachricht 218 wird wiederum als Broadcast übertragen und dem Teilnehmer A nach entsprechender Validierung gutgeschrieben, indem die Daten 164 dementsprechend aktualisiert werden.

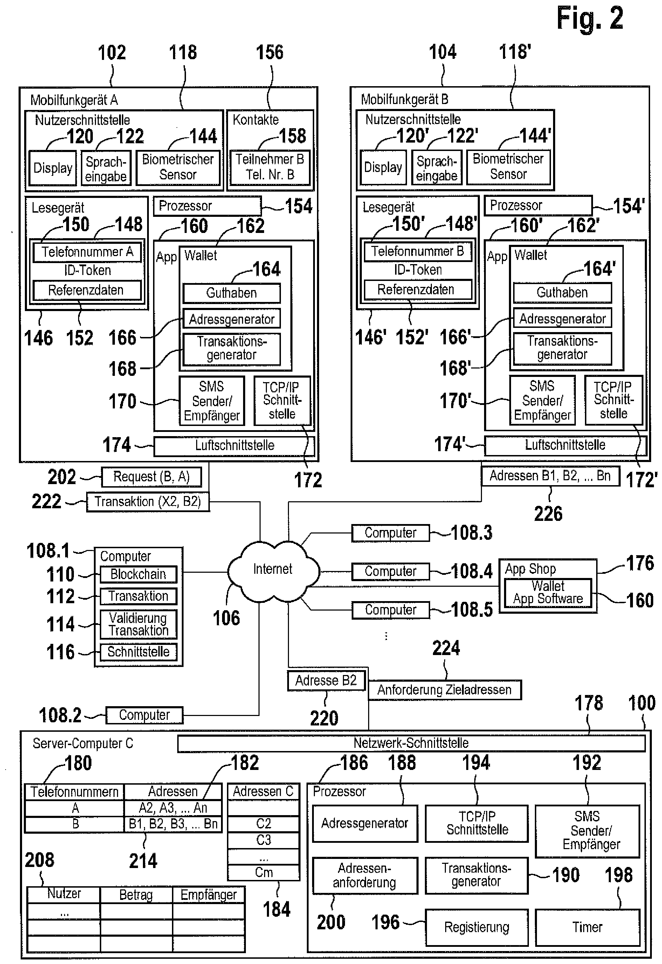

Die Figur 2 zeigt das Datenverarbeitungssystem der Figur 1 nachdem der Betrag X1 erfolgreich an den Teilnehmer B überwiesen worden ist, weil der Teilnehmer seiner Registrierung durch Installation der Wallet-App 160' zugestimmt hat. Im Weiteren kann beispielsweise der Teilnehmer A weitere Überweisungen an den Teilnehmer B tätigen, ohne dass der Servercomputer 100 als Treuhänder fungieren muss, das heißt, die Überweisung kann unmittelbar von dem Teilnehmer A an den Teilnehmer B erfolgen.

Hierzu sendet das Mobilfunkgerät 102 zunächst wiederum die Nachricht 202 analog zu dem oben genannten Schritt a). Der Servercomputer 100 führt dann wiederum die Datenbankabfrage der Registrierungsdatenbank 180 durch, analog zu dem obigen Schritt b). In dem hier betrachteten Fall führt die Datenbankabfrage zu einem Treffer, da tatsächlich die Telefonnummer B in der Registrierungsdatenbank 180 gespeichert ist.

Der Servercomputer 100 antwortet in diesem Fall auf die Nachricht 202 mit der Antwort 220, die die nächste noch nicht verwendete Zieladresse des Teilnehmers B, das heißt die Zieladresse B2, beinhaltet, um diese über das Internet 106 an das Mobilfunkgerät 102 zu kommunizieren. Zur Überweisung eines Betrags X2 von dem Teilnehmer A an den Teilnehmer B erzeugt nun der Transaktionsgenerator 160 eine Transaktionsnachricht 222, die den Betrag X2 und die Zieladresse B2 beinhaltet. Aufgrund einer Validierung dieser Transaktion durch einen der Mining Nodes 108 wird dann dieser Betrag X2 unmittelbar an das Mobilfunkgerät 104 überwiesen, sodass die Daten 164' ein entsprechendes Guthaben X2 spezifizieren, gegebenenfalls abzüglich einer Servicegebühr.

Wenn aufgrund einer größeren Anzahl von aufeinanderfolgenden Überweisungen von dem Teilnehmer A oder anderen Teilnehmern an den Teilnehmer B die Anzahl der noch unbenutzten Adressen in dem Pufferspeicher 214 zur Neige geht, das heißt einen vorgegebenen Schwellwert unterschreitet, so wird durch das Programmmodul 200 eine Nachricht 224 generiert, um neue Zieladressen von der Wallet-App 160' des Mobilfunkgeräts 104 anzufordern. Die Wallet-App 160' verwendet daraufhin den Adressgenerator 166' zur Erzeugung von beispielsweise n weiteren Adressen, die als Antwort 226 auf die Nachricht 224 an den Servercomputer 100 gesendet und in dem Pufferspeicher 214 gespeichert werden.

Dieser Prozess des Auffüllens des Pufferspeichers 214 mit noch nicht verwendeten Zieladressen des Teilnehmers B kann asynchron zu der Verarbeitung von Transaktionsnachrichten erfolgen. Entsprechendes gilt für die Auffüllung des Pufferspeichers 182 für Zieladressen des Teilnehmers A sowie für die Auffüllung des Pufferspeichers 184 für die Zieladressen des Teilnehmers C, das heißt des Servercomputers 100.

Dadurch, dass die Benachrichtung des Teilnehmers B hinsichtlich der erforderlichen Registrierung über die SMS 210 erfolgt, ist zugleich sichergestellt, dass die Nachricht tatsächlich an den Teilnehmer B gelangt, da beispielsweise eine sogenannte Man-in-the Middle-Attack bei einer SMS kaum durchführbar ist.

### Bezugszeichenliste

- 100: Servercomputer
- 102: Mobilfunkgerät
- 104: Mobilfunkgerät
- 106: Internet
- 108: Mining Nodes
- 110: Blockchain
- 112: Transaktion
- 114: Programmmodul (Validierung Transaktion)
- 116: Kommunikationsschnittstelle
- 118: Nutzerschnittstelle
- 120: Display
- 122: Spracheingabemodul
- 144: biometrischer Sensor
- 146: Lesegerät
- 148: ID-Token
- 150: Speicherbereich
- 152: Speicherbereich
- 154: Prozessor
- 156: Anwendungsprogramm (Kontakte)
- 158: Kontakt
- 160: Wallet-App
- 162: Wallet
- 164: Daten (Guthaben)
- 166: Adressgenerator
- 168: Transaktionsgenerator
- 170: Schnittstelle (SMS)
- 172: Schnittstelle(TCP/IP)
- 174: Luftschnittstelle
- 176: App-Shop
- 178: Netzwerkschnittstelle
- 180: Registrierungsdatenbank
- 182: Pufferspeicher
- 184: Pufferspeicher
- 186: Prozessor
- 188: Adressgenerator
- 190: Transaktionsgenerator
- 192: Modul
- 194: Modul
- 196: Programmmodul
- 198: Timer
- 200: Programmmodul
- 202: Nachricht
- 204: Antwort
- 206: Transaktionsnachricht
- 208: Transaktionsdatenbank
- 210: SMS
- 212: Nachricht
- 214: Puffer
- 216: Transaktionsnachricht
- 218: Transaktionsnachricht
- 220: Antwort
- 222: Transaktionsnachricht
- 224: Nachricht
- 226: Antwort

## Patentansprüche

1. Elektronisches Bezahlverfahren zur Überweisung eines Betrags (X1) einer Kryptowährung von einem ersten Mobilfunkgerät (102), auf dem ein Wallet-Programm (160) zur Realisierung eines Client Nodes der Kryptowährung installiert ist, eines ersten Teilnehmers (A) an ein zweites Mobilfunkgerät eines zweiten Teilnehmers (B) über das Internet (106), wobei dem ersten Mobilfunkgerät eine erste Telefonnummer und dem zweiten Mobilfunkgerät eine zweite Telefonnummer zugeordnet ist, und das erste und zweite Mobilfunkgerät jeweils eine Netzwerkschnittstelle (170, 174) zu einem digitalen zellularen Mobilfunknetzwerk haben, wobei für Überweisungen der Kryptowährung Zieladressen benutzt werden, die nur einmal verwendet werden, wobei eine Anzahl von Mining-Nodes (108) der Kryptowährung an das Internet angeschlossen ist, die zur Validierung von Überweisungen ausgebildet sind, wobei die Überweisung mittels eines an das Internet angeschlossenen Servercomputers (100), durch den ein weiterer Client Node der Kryptowährung gebildet wird, erfolgt, wobei der Servercomputer Zugriff auf eine Registrierungsdatenbank (180) hat, in der Telefonnummern von registrierten Teilnehmern gespeichert sind, denen jeweils Zieladressen zugeordnet und in einem der jeweiligen Telefonnummer zugeordneten Pufferspeicher (182, 214) einer Mehrzahl von Pufferspeichern (182, 184, 214) des Servercomputers gespeichert sind, mit folgenden Schritten:
a) Senden einer Nachricht (202) von dem ersten Mobilfunkgerät an den Servercomputer über das Internet, wobei die Nachricht die erste und die zweite Telefonnummer beinhaltet,
b) Durchführung einer Datenbankabfrage der Registrierungsdatenbank mit der zweiten Telefonnummer als Zugriffsschlüssel durch den Servercomputer, um zu prüfen, ob der zweite Teilnehmer bereits registriert ist,
c) in dem Fall, dass der zweite Teilnehmer nicht registriert ist:
i. Senden einer Zieladresse (204) des Servercomputers von dem Servercomputer an das erste Mobilfunkgerät,
ii. Erzeugung einer Transaktionsnachricht (206) durch das erste Mobilfunkgerät, wobei die Transaktionsnachricht den zu überweisenden Betrag und die Zieladresse des Servercomputers beinhaltet,
iii. Senden der Transaktionsnachricht durch das erste Mobilfunkgerät als Broadcast an die Nodes der Kryptowährung über das Internet,
iv. Validierung der Transaktionsnachricht durch die Mining Nodes mithilfe einer Blockchain,
v. Senden einer Nachricht (210) von dem Servercomputer an das zweite Mobilfunkgerät über einen Signalisierungslayer des Mobilfunknetzwerks, um den zweiten Teilnehmer zur Registrierung aufzufordern,
vi. Installation des Wallet-Programms (160') auf dem zweiten Mobilfunkgerät zur Realisierung eines weiteren Client Nodes der Kryptowährung,
vii. Erzeugung einer Zieladresse des zweiten Mobilfunkgeräts durch das auf dem zweiten Mobilfunkgerät installierte Wallet-Programm,
viii. Senden der Zieladresse (212) des zweiten Mobilfunkgeräts von dem zweiten Mobilfunkgerät an den Servercomputer,
ix. Erzeugung einer weiteren Transaktionsnachricht (216) durch den Servercomputer, wobei die weitere Transaktionsnachricht den Betrag und die Zieladresse des zweiten Mobilfunkgeräts beinhaltet, und Senden der weiteren Transaktionsnachricht durch den Servercomputer als Broadcast an die Nodes über das Internet,
x. Validierung der weiteren Transaktionsnachricht durch die Mining Nodes mithilfe der Blockchain,
d) für den Fall, dass der zweite Teilnehmer bereits registriert ist:
i. Senden einer Zieladresse (220) des zweiten Mobilfunkgeräts von dem Servercomputer an das erste Mobilfunkgerät, wobei der Servercomputer auf die Zieladresse des zweiten Mobilfunkgeräts mit Hilfe der zweiten Telefonnummer als Zugriffschlüssel zugreift,
ii. Erzeugung einer Transaktionsnachricht (222) durch das erste Mobilfunkgerät, wobei die Transaktionsnachricht den Betrag und die Zieladresse des zweiten Mobilfunkgeräts beinhaltet,
iii. Senden der Transaktionsnachricht durch das erste Mobilfunkgerät als Broadcast an die Nodes über das Internet,
iv. Validierung der Transaktionsnachricht durch die Mining Nodes mithilfe der Blockchain
wobei in dem Schritt c) vii. mehrere Zieladressen für das zweite Mobilfunkgerät durch das auf dem zweiten Mobilfunkgerät installierte Wallet-Programm erzeugt werden und die mehreren Zieladressen in dem Schritt c) viii. an den Servercomputer gesendet werden, wobei aufgrund der Beantwortung der in dem Schritt c) v. von dem Servercomputer an das zweite Mobilfunkgerät gesendeten Nachricht durch Senden der mehrerer Zieladressen des zweiten Mobilfunkgeräts eine Registrierung des Teilnehmers B durch den Servercomputer erfolgt, wozu ein Eintrag in der Registrierungsdatenbank mit der zweiten Telefonnummer, die der Servercomputer von ersten Mobilfunkgerät empfangen hat, erzeugt wird, wobei die mehreren Zieladressen des zweiten Mobilfunkgeräts von dem Servercomputer in den der zweiten Telefonnummer zugeordneten Pufferspeicher (214) gespeichert und dem für den Teilnehmer B in der Registrierungsdatenbank erzeugten Eintrag zugeordnet werden, und wobei der Servercomputer eine Nachricht (224) an das zweite Mobilfunkgerät sendet, sobald die verbleibende Anzahl von Zieladressen des zweiten Mobilfunkgeräts in dem der zweiten Telefonnummer zugeordneten Pufferspeicher (214) des Servercomputers einen vorgegebenen Schwellwert unterschreitet, um weitere Zieladressen des zweiten Mobilfunkgeräts zur Auffüllung dieses Pufferspeichers (214) anzufordern.

2. Elektronisches Bezahlverfahren nach Anspruch 1, wobei die Mehrzahl von Pufferspeichern (182, 184, 214) des Servercomputers einen weiteren Pufferspeicher (184) zur Speicherung mehrerer der Zieladressen des Servercomputers und einen Adressgenerator (188) zur Generierung von Zieladressen des Servercomputers aufweist, wobei die in dem Schritt c) i. gesendete Zieladresse des Servercomputers aus dem weiteren Pufferspeicher (184) gelöscht wird, und der Servercomputer so konfiguriert ist, dass der weitere Pufferspeicher (184) mit Zieladressen von dem Adressgenerator aufgefüllt wird, sobald die verbleibende Anzahl von Zieladressen in dem weiteren Pufferspeicher (184) einen vorgegebenen Schwellwert unterschreitet.

3. Verfahren nach Anspruch 1 oder 2, wobei mit dem Senden der Nachricht in dem Schritt c) v. ein Timer (198) von dem Servercomputer gestartet wird, um in dem Fall, dass vor Ablauf des Timers keine Zieladresse (212) von dem zweiten Mobilfunkgerät empfangen worden ist, die folgenden Schritte durchzuführen:
- Erzeugung einer weiteren Transaktionsnachricht (218) durch den Servercomputer, wobei die weitere Transaktionsnachricht den Betrag und die Zieladresse des ersten Mobilfunkgeräts beinhaltet,
- Senden der Transaktionsnachricht durch den Servercomputer als Broadcast an die Nodes über das Internet,
- Validierung der Transaktionsnachricht durch den Mining Nodes mithilfe der Blockchain.

4. Verfahren nach Anspruch 3, wobei die Zieladresse des ersten Mobilfunkgeräts von dem Servercomputer aus dem der ersten Telefonnummer zugeordneten Pufferspeicher (182) ausgelesen wird, in dem mehrere Zieladressen des ersten Mobilfunkgeräts gespeichert sind.

5. Verfahren nach einem der vorhergehenden Ansprüche, wobei es sich bei der in dem Schritt c) v. gesendeten Nachricht (210) um eine SMS oder eine binary SMS handelt, die einen Link zu einem App-Shop beinhaltet, über den das Wallet-Programm auf das zweite Mobilfunkgerät herunterladbar ist.

6. Verfahren nach einem der vorhergehenden Ansprüche, wobei zur Erzeugung einer Zieladresse ein asymmetrisches Schlüsselpaar bestehend aus einem öffentlichen Schlüssel und einem privaten Schlüssel erzeugt wird, wobei durch einen Hash-Wert des öffentlichen Schlüssels die Zieladresse gegeben ist.

7. Verfahren nach einem der vorhergehenden Ansprüche, wobei es sich bei der Kryptowährung um Bitcoin, Ethereum oder eine andere Blockchain-basierte Kryptowährung handelt.

8. Servercomputersystem zur Bildung eines Client Nodes einer Kryptowährung mit
- einer Netzwerkschnittstelle (178) zum Anschluss an das Internet (106) und zum Senden einer Nachricht über einen Signalisierungslayer eines digitalen zellularen Mobilfunknetzwerks,
- einer Registrierungsdatenbank (180) zur Registrierung von Teilnehmern der Kryptowährung anhand von deren jeweiliger Telefonnummer, wobei in der Registrierungsdatenbank (180) die Telefonnummern der registrierten Teilnehmer gespeichert sind, denen jeweils Zieladressen zugeordnet und in einem der jeweiligen Telefonnummer zugeordneten Pufferspeicher (182, 214) einer Mehrzahl von Pufferspeichern (182, 184, 214) des Servercomputers gespeichert sind,
wobei der Servercomputer zur Durchführung der folgenden Schritte konfiguriert ist:
d) Empfangen einer Nachricht (202) von dem ersten Mobilfunkgerät über das Internet, wobei die Nachricht die erste und die zweite Telefonnummer beinhaltet,
e) Durchführung einer Datenbankabfrage der Registrierungsdatenbank mit der zweiten Telefonnummer als Zugriffsschlüssel, um zu prüfen, ob der zweite Teilnehmer bereits registriert ist,
f) in dem Fall, dass der zweite Teilnehmer nicht registriert ist:
i. Senden einer Zieladresse (204) des Servercomputers von dem Servercomputer an das erste Mobilfunkgerät,
ii. Empfangen einer Transaktionsnachricht (206) von dem ersten Mobilfunkgerät, wobei die Transaktionsnachricht den zu überweisenden Betrag und die Zieladresse des Servercomputers beinhaltet,
iii. nach Validierung der Transaktionsnachricht durch Mining Nodes, Senden einer Nachricht (210) von dem Servercomputer an das zweite Mobilfunkgerät über einen Signalisierungslayer des Mobilfunknetzwerks, um den zweiten Teilnehmer zur Registrierung aufzufordern,
viii. Empfang zumindest einer Zieladresse (212) des zweiten Mobilfunkgeräts von dem zweiten Mobilfunkgerät,
ix. Erzeugung einer weiteren Transaktionsnachricht (216) durch den Servercomputer, wobei die weitere Transaktionsnachricht den Betrag und die Zieladresse des zweiten Mobilfunkgeräts beinhaltet, und Senden der weiteren Transaktionsnachricht durch den Servercomputer als Broadcast an die Nodes über das Internet,
d) für den Fall, dass der zweite Teilnehmer bereits registriert ist: Senden einer Zieladresse (220) des zweiten Mobilfunkgeräts von dem Servercomputer an das erste Mobilfunkgerät, wobei der Servercomputer auf die Zieladresse des zweiten Mobilfunkgeräts mit Hilfe der zweiten Telefonnummer als Zugriffschlüssel zugreift,
wobei der Servercomputer so konfiguriert ist, dass in dem Schritt c) vii. mehrere Zieladressen für das zweite Mobilfunkgerät durch das auf dem zweiten Mobilfunkgerät installierte Wallet-Programm erzeugt werden und die mehreren Zieladressen in dem Schritt c viii. an den Servercomputer gesendet werden, wobei aufgrund der Beantwortung der in dem Schritt c) v. von dem Servercomputer an das zweite Mobilfunkgerät gesendeten Nachricht durch Senden der mehrerer Zieladressen des zweiten Mobilfunkgeräts eine Registrierung des Teilnehmers B durch den Servercomputer erfolgt, wozu ein Eintrag in der Registrierungsdatenbank mit der zweiten Telefonnummer, die der Servercomputer von ersten Mobilfunkgerät empfangen hat, erzeugt wird, wobei die mehreren Zieladressen des zweiten Mobilfunkgeräts von dem Servercomputer in den der zweiten Telefonnummer zugeordneten Pufferspeicher (214) gespeichert und dem für den Teilnehmer B in der Registrierungsdatenbank erzeugten Eintrag zugeordnet werden, und wobei der Servercomputer eine Nachricht (224) an das zweite Mobilfunkgerät sendet, sobald die verbleibende Anzahl von Zieladressen des zweiten Mobilfunkgeräts in dem der zweiten Telefonnummer zugeordneten Pufferspeicher (214) des Servercomputers einen vorgegebenen Schwellwert unterschreitet, um weitere Zieladressen des zweiten Mobilfunkgeräts zur Auffüllung dieses Pufferspeichers (214) anzufordern.

9. Servercomputer nach Anspruch 8, wobei die Mehrzahl von Pufferspeichern (182, 184, 214) des Servercomputers einen weiteren Pufferspeicher (184) zur Speicherung mehrerer der Zieladressen des Servercomputers und einen Adressgenerator (188) zur Generierung von Zieladressen des Servercomputers aufweist, wobei die in dem Schritt c) i. gesendete Zieladresse des Servercomputers aus dem weiteren Pufferspeicher (184) gelöscht wird, und der Servercomputer so konfiguriert ist, dass der weitere Pufferspeicher (184) mit Zieladressen von dem Adressgenerator aufgefüllt wird, sobald die verbleibende Anzahl von Zieladressen in dem weiteren Pufferspeicher (184) einen vorgegebenen Schwellwert unterschreitet.

10. Servercomputer nach Anspruch 8 oder 9, wobei der Servercomputer so konfiguriert ist, dass, wobei mit dem Senden der Nachricht in dem Schritt c) v. ein Timer (198) von dem Servercomputer gestartet wird, um in dem Fall, dass vor Ablauf des Timers keine Zieladresse (212) von dem zweiten Mobilfunkgerät empfangen worden ist, die folgenden Schritte durchzuführen:
- Erzeugung einer weiteren Transaktionsnachricht (218) durch den Servercomputer, wobei die weitere Transaktionsnachricht den Betrag und die Zieladresse des ersten Mobilfunkgeräts beinhaltet,
- Senden der Transaktionsnachricht durch den Servercomputer als Broadcast an die Nodes über das Internet,
- Validierung der Transaktionsnachricht durch den Mining Nodes mithilfe der Blockchain.

11. Servercomputer nach einem der Ansprüche 8 bis 10, wobei es sich bei der in dem Schritt c) v. gesendeten Nachricht (210) um eine SMS oder eine binary SMS handelt, die einen Link zu einem App-Shop beinhaltet, über den das Wallet-Programm auf das zweite Mobilfunkgerät herunterladbar ist.

12. Datenverarbeitungssystem mit einem Servercomputersystem nach einem der Ansprüche 8 bis 11 und zumindest ersten und zweiten Mobilfunkgeräten.

13. Datenverarbeitungssystem nach Anspruch 12 mit mehreren Mining Nodes.

## Claims

1. Electronic payment method for transferring a sum (X1) of a cryptocurrency from a first mobile device (102), on which a wallet program (160) for implementing a client node of the cryptocurrency is installed, of a first subscriber (A) to a second mobile device of a second subscriber (B) via the Internet (106), wherein the first mobile device is assigned a first telephone number and the second mobile device is assigned a second telephone number, and the first and second mobile device each have a network interface (170, 174) to a digital cellular mobile network, wherein destination addresses, which are used only once, are used for transfers of the cryptocurrency, wherein a number of mining nodes (108) of the cryptocurrency, which are designed to validate transfers, are connected to the Internet, wherein the transfer takes place by means of a server computer (100), which is connected to the Internet and by which a further client node of the cryptocurrency is formed, wherein the server computer has access to a registration database (180), in which telephone numbers of registered subscribers are stored, each of these being assigned destination addresses and being stored in a buffer memory (182, 214) allocated to the respective telephone number among a plurality of buffer memories (182, 184, 214) of the server computer, the method comprising the following steps:
a) sending of a message (202) from the first mobile device to the server computer via the Internet, the message containing the first and the second telephone number,
b) running of a database query of the registration database by the server computer, using the second telephone number as the access key, in order to check whether the second subscriber is already registered,
c) in the event that the second subscriber is not registered:
i. sending of a destination address (204) of the server computer from the server computer to the first mobile device,
ii. generation of a transaction message (206) by the first mobile device, the transaction message containing the sum to be transferred and the destination address of the server computer,
iii. sending of the transaction message by the first mobile device as a broadcast to the nodes of the cryptocurrency via the Internet,
iv. validation of the transaction message by the mining nodes using a blockchain,
v. sending of a message (210) from the server computer to the second mobile device via a signalling layer of the mobile network in order to prompt the second subscriber to register,
vi. installation of the wallet program (160') on the second mobile device in order to implement a further client node of the cryptocurrency,
vii. generation of a destination address of the second mobile device by the wallet program installed on the second mobile device,
viii. sending of the destination address (212) of the second mobile device from the second mobile device to the server computer,
ix. generation of a further transaction message (216) by the server computer, the further transaction message containing the sum and the destination address of the second mobile device, and sending of the further transaction message by the server computer as a broadcast to the nodes via the Internet,
x. validation of the further transaction message by the mining nodes using the blockchain,
d) in the event that the second subscriber is already registered:
i. sending of a destination address (220) of the second mobile device from the server computer to the first mobile device, the server computer accessing the destination address of the second mobile device by using the second telephone number as the access key,
ii. generation of a transaction message (222) by the first mobile device, the transaction message containing the sum and the destination address of the second mobile device,
iii. sending of the transaction message by the first mobile device as a broadcast to the nodes via the Internet,
iv. validation of the transaction message by the mining nodes using the blockchain,
wherein in step c) vii. a plurality of destination addresses for the second mobile device are generated by the wallet program installed on the second mobile device, and the plurality of destination addresses are sent to the server computer in step c) viii., wherein, based on the response to the message sent by the server computer to the second mobile device in step c) v., a registration of subscriber B by the server computer takes place by sending the plurality of destination addresses of the second mobile device, for which purpose an entry is generated in the registration database using the second telephone number, which the server computer has received from the first mobile device, wherein the plurality of destination addresses of the second mobile device are stored by the server computer in the buffer memory (214) allocated to the second telephone number and are associated with the entry generated for subscriber B in the registration database, and wherein, as soon as the remaining number of destination addresses of the second mobile device in the buffer memory (214) of the server computer allocated to the second telephone number falls below a predefined threshold, the server computer sends a message (224) to the second mobile device in order to request further destination addresses of the second mobile device to fill this buffer memory (214).

2. Electronic payment method according to claim 1, wherein the plurality of buffer memories (182, 184, 214) of the server computer comprises a further buffer memory (184) for storing a plurality of the destination addresses of the server computer and an address generator (188) for generating destination addresses of the server computer, wherein the destination address of the server computer sent in step c) i. is deleted from the further buffer memory (184), and the server computer is configured such that the further buffer memory (184) is filled with destination addresses from the address generator as soon as the remaining number of destination addresses in the further buffer memory (184) falls below a predefined threshold.

3. Method according to claim 1 or 2, wherein, when the message is sent in step c) v., a timer (198) is started by the server computer in order to carry out the following steps if no destination address (212) has been received from the second mobile device before the timer has expired:
- generation of a further transaction message (218) by the server computer, the further transaction message containing the sum and the destination address of the first mobile device,
- sending of the transaction message by the server computer as a broadcast to the nodes via the Internet,
- validation of the transaction message by the mining nodes using the blockchain.

4. Method according to claim 3, wherein the destination address of the first mobile device is read by the server computer from the buffer memory (182) allocated to the first telephone number, in which a plurality of destination addresses of the first mobile device are stored.

5. Method according to any one of the preceding claims, wherein the message (210) sent in step c) v. is an SMS or a binary SMS containing a link to an app shop, via which the wallet program can be downloaded to the second mobile device.

6. Method according to any one of the preceding claims, wherein, in order to generate a destination address, an asymmetric key pair consisting of a public key and a private key is generated, the destination address being given by a hash value of the public key.

7. Method according to any one of the preceding claims, wherein the cryptocurrency is Bitcoin, Ethereum or another blockchain-based cryptocurrency.

8. Server computer system for forming a client node of a cryptocurrency, comprising
- a network interface (178) for connection to the Internet (106) and for sending a message via a signalling layer of a digital cellular mobile network,
- a registration database (180) for registering subscribers of the cryptocurrency based on the respective telephone numbers thereof, wherein the telephone numbers of the registered subscribers are stored in the registration database (180), each of these being assigned destination addresses and being stored in a buffer memory (182, 214) allocated to the respective telephone number among a plurality of buffer memories (182, 184, 214) of the server computer,
wherein the server computer is configured to carry out the following steps:
d) receiving of a message (202) from the first mobile device via the Internet, the message containing the first and the second telephone number,
e) running of a database query of the registration database, using the second telephone number as the access key, in order to check whether the second subscriber is already registered,
f) in the event that the second subscriber is not registered:
i. sending of a destination address (204) of the server computer from the server computer to the first mobile device,
ii. receiving of a transaction message (206) from the first mobile device, the transaction message containing the sum to be transferred and the destination address of the server computer,
iii. after validation of the transaction message by mining nodes, sending of a message (210) from the server computer to the second mobile device via a signalling layer of the mobile network in order to prompt the second subscriber to register,
viii. receiving of at least one destination address (212) of the second mobile device from the second mobile device,
ix. generation of a further transaction message (216) by the server computer, the further transaction message containing the sum and the destination address of the second mobile device, and sending of the further transaction message by the server computer as a broadcast to the nodes via the Internet,
d) in the event that the second subscriber is already registered: sending of a destination address (220) of the second mobile device from the server computer to the first mobile device, the server computer accessing the destination address of the second mobile device by using the second telephone number as the access key,
wherein the server computer is configured such that in step c) vii. a plurality of destination addresses for the second mobile device are generated by the wallet program installed on the second mobile device, and the plurality of destination addresses are sent to the server computer in step c) viii., wherein, based on the response to the message sent from the server computer to the second mobile device in step c) v., a registration of subscriber B by the server computer takes place by sending the plurality of destination addresses of the second mobile device, for which purpose an entry is generated in the registration database using the second telephone number, which the server computer has received from the first mobile device, wherein the plurality of destination addresses of the second mobile device are stored by the server computer in the buffer memory (214) allocated to the second telephone number and are associated with the entry generated for subscriber B in the registration database, and wherein, as soon as the remaining number of destination addresses of the second mobile device in the buffer memory (214) of the server computer allocated to the second telephone number falls below a predefined threshold, the server computer sends a message (224) to the second mobile device in order to request further destination addresses of the second mobile device to fill this buffer memory (214).

9. Server computer according to claim 8, wherein the plurality of buffer memories (182, 184, 214) of the server computer comprises a further buffer memory (184) for storing a plurality of the destination addresses of the server computer and an address generator (188) for generating destination addresses of the server computer, wherein the destination address of the server computer sent in step c) i. is deleted from the further buffer memory (184), and the server computer is configured such that the further buffer memory (184) is filled with destination addresses from the address generator as soon as the remaining number of destination addresses in the further buffer memory (184) falls below a predefined threshold.

10. Server computer according to claim 8 or 9, wherein the server computer is configured such that, when the message is sent in step c) v., a timer (198) is started by the server computer in order to carry out the following steps if no destination address (212) has been received from the second mobile device before the timer has expired:
- generation of a further transaction message (218) by the server computer, the further transaction message containing the sum and the destination address of the first mobile device,
- sending of the transaction message by the server computer as a broadcast to the nodes via the Internet,
- validation of the transaction message by the mining nodes using the blockchain.

11. Server computer according to any one of claims 8 to 10, wherein the message (210) sent in step c) v. is an SMS or a binary SMS containing a link to an app shop, via which the wallet program can be downloaded to the second mobile device.

12. Data processing system comprising a server computer system according to any one of claims 8 to 11 and at least first and second mobile devices.

13. Data processing system according to claim 12, comprising a plurality of mining nodes.

## Revendications

1. Procédé de paiement électronique permettant le virement d'un montant (X1) d'une monnaie cryptographique à partir d'un premier appareil de télécommunication mobile (102), sur lequel est installé un programme de portefeuille (160) pour la réalisation d'un nœud client de la monnaie cryptographique, d'un premier participant (A) et d'un deuxième appareil de télécommunication mobile d'un deuxième participant (B) par le biais d'internet, où un premier numéro de téléphone est associé au premier appareil de télécommunication mobile et un deuxième numéro de téléphone est associé au deuxième appareil de télécommunication mobile, et les premier et deuxième appareils de télécommunication mobiles ont respectivement une interface réseau (170, 174) vers un réseau de télécommunication mobile cellulaire numérique, où, pour les virements de la monnaie cryptographique, des adresses cibles sont utilisées qui ne sont employées qu'une seule fois, où un certain nombre de nœuds de minage (108) de la monnaie cryptographique est raccordé à internet, nœuds qui sont conçus pour la validation de virements , où le virement a lieu au moyen d'un ordinateur serveur (100), connecté à internet, par lequel un nouveau nœud client de la monnaie cryptographique est constitué, où l'ordinateur serveur a accès à une banque de données d'enregistrement (180) dans laquelle les numéros de téléphone de participants enregistrés sont stockés, auxquels une adresse cible est respectivement associée, et sont stockés dans une mémoire tampon (182, 214), associée au numéro de téléphone respectif, parmi une multiplicité de mémoires tampons (182, 184, 214) de l'ordinateur serveur, avec les étapes suivantes :
a) l'envoi d'un message (202) du premier appareil de télécommunication mobile à l'ordinateur serveur par le biais d'internet, où le message contient le premier et le deuxième numéro de téléphone,
b) l'exécution d'une interrogation de banque de données de la banque de données d'enregistrement avec le deuxième numéro de téléphone servant de clé d'accès par l'ordinateur serveur afin de vérifier si le deuxième participant est déjà enregistré,
c) dans le cas où le deuxième participant n'est pas enregistré :
i. l'envoi d'une adresse cible (204) de l'ordinateur serveur, par l'ordinateur serveur, au premier appareil de télécommunication mobile,
ii. la création d'un message de transaction (206) par le premier appareil de télécommunication mobile, où le message de transaction contient le montant devant être viré et l'adresse cible de l'ordinateur serveur,
iii. l'envoi du message de transaction par le premier appareil de télécommunication mobile sous forme d'une information vers les nœuds de la monnaie cryptographique par le biais d'internet,
vi. la validation du message de transaction par les nœuds de minage à l'aide d'une chaîne de blocs,
v. l'envoi d'un message (210) de l'ordinateur serveur au deuxième appareil de télécommunication mobile par le biais d'une couche de signalisation du réseau de télécommunication mobile afin d'inciter le deuxième participant à s'enregistrer,
vi. l'installation du programme de portefeuille (160') sur le deuxième appareil de télécommunication mobile pour la réalisation d'un nouveau nœud client de la monnaie cryptographique,
vii. la création d'une adresse cible du deuxième appareil de télécommunication mobile par le programme de portefeuille installé sur le deuxième appareil de télécommunication mobile,
viii. l'envoi de l'adresse cible (212) du deuxième appareil de télécommunication mobile du deuxième appareil de télécommunication mobile à l'ordinateur serveur,
ix. la création d'un nouveau message de transaction (216) par l'ordinateur serveur, où le nouveau message de transaction contient le montant et l'adresse cible du deuxième appareil de télécommunication mobile, et l'envoi du nouveau message de transaction par l'ordinateur serveur sous forme d'information aux nœuds par le biais d'internet,
x. la validation du nouveau message de transaction par les nœuds de minage à l'aide de la chaîne de blocs,
d) dans le cas où le deuxième participant est déjà enregistré :
i. l'envoi d'une adresse cible (220) du deuxième appareil de télécommunication mobile à partir de l'ordinateur serveur au premier appareil de télécommunication mobile, où l'ordinateur serveur a accès à l'adresse cible du deuxième appareil de télécommunication mobile à l'aide du deuxième numéro de téléphone servant de clé d'accès,
ii. la création d'un message de transaction (222) par le premier appareil de télécommunication mobile, où le message de transaction contient le montant et l'adresse cible du deuxième appareil de télécommunication mobile,
iii. l'envoi du message de transaction par le premier appareil de télécommunication mobile sous forme d'information aux nœuds par le biais d'internet,
vi. la validation du message de transaction par les nœuds de minage à l'aide de la chaine de blocs
dans lequel, dans l'étape c) vii., plusieurs adresses cibles pour le deuxième appareil de télécommunication mobile sont créées par le programme de portefeuille installé sur le deuxième appareil de télécommunication mobile, et les nombreuses adresses cibles sont envoyées à l'ordinateur serveur dans l'étape c) viiii., où, en raison de la réponse au message envoyé dans l'étape c) v. de l'ordinateur serveur au deuxième appareil de télécommunication mobile, par l'envoi aux nombreuses adresses cibles du deuxième appareil de télécommunication mobile, un enregistrement du participant B a lieu par l'ordinateur serveur, ce pour quoi, une entrée est créée dans la banque de données d'enregistrement avec le deuxième numéro de téléphone que l'ordinateur serveur a reçu à partir du premier appareil de télécommunication mobile, où les nombreuses adresses cibles du deuxième appareil de télécommunication mobile sont stockées dans la mémoire tampon (214) associée au deuxième numéro de téléphone et sont associées à l'entrée créée pour le participant B dans la banque de données d'enregistrement, et où l'ordinateur serveur envoie un message (224) au deuxième appareil de télécommunication mobile dès que le nombre restant d'adresses cibles du deuxième appareil de télécommunication mobile est en-dessous d'une valeur limite prédéfinie dans la mémoire tampon (214) de l'ordinateur serveur associée au deuxième numéro de téléphone, afin de demander des nouvelles adresses cibles du deuxième appareil de télécommunication mobile pour le remplissage de la mémoire tampon (214).

2. Procédé de paiement électronique selon la revendication 1, dans lequel la multiplicité de mémoires tampons (182, 184, 214) de l'ordinateur serveur présente une nouvelle mémoire tampon (184) pour le stockage de plusieurs parmi les adresses cibles de l'ordinateur serveur et un générateur d'adresses (188) pour la génération d'adresses cibles de l'ordinateur serveur, où l'adresse cible de l'ordinateur serveur envoyée dans l'étape c) i. est effacée de la nouvelle mémoire tampon (184), et l'ordinateur serveur est conçu de manière à ce que la nouvelle mémoire tampon (184) soit remplie d'adresses cibles par le générateur d'adresses dès que le nombre restant d'adresses cibles dans la nouvelle mémoire tampon (184) est en-dessous d'une valeur limite prédéfinie.

3. Procédé selon la revendication 1 ou la revendication 2, dans lequel un temporisateur (198) est démarré par l'ordinateur serveur avec l'envoi du message dans l'étape c) v. afin, dans le cas où aucune adresse cible (212) n'a été reçue par le deuxième appareil de télécommunication mobile avant la fin de la durée du temporisateur, d'effectuer les étapes suivantes :
- la création d'un nouveau message de transaction (218) par l'ordinateur serveur, où le nouveau message de transaction contient le montant et l'adresse cible du premier appareil de télécommunication mobile,
- l'envoi du message de transaction par l'ordinateur serveur sous forme d'information aux nœuds par le biais d'internet,
- la validation du message de transaction par les nœuds de minage à l'aide de la chaîne de blocs.

4. Procédé selon la revendication 3, dans lequel l'adresse cible du premier appareil de télécommunication mobile est lue par l'ordinateur serveur à partir de la mémoire tampon (182) associée au premier numéro de téléphone, dans laquelle plusieurs adresses cibles du premier appareil de télécommunication mobile sont stockées.

5. Procédé selon l'une des revendications précédentes, dans lequel, dans le cas du message (210) envoyé dans l'étape c) v., il s'agit d'un SMS ou d'un SMS binaire qui contient un lien vers un App-Shop, par le biais duquel le programme de portefeuille peut être téléchargé sur le deuxième appareil de télécommunication mobile.

6. Procédé selon l'une des revendications précédentes, dans lequel une paire de clés asymétrique constituée d'une clé publique et d'une clé privée est créée pour la création d'une adresse cible, où l'adresse cible est donnée par une valeur de hachage de la clé publique.

7. Procédé selon l'une des revendications précédentes, dans lequel, dans le cas de la monnaie cryptographique, il s'agit de bitcoin, d'ethereum ou d'une autre monnaie cryptographique basée sur une chaîne de blocs.

8. Ordinateur serveur permettant la formation d'un nœud client d'une monnaie cryptographique avec
- une interface réseau (178) permettant la connexion à internet (106) et l'envoi d'un message par le biais d'une couche de signalisation d'un réseau de télécommunication mobile cellulaire numérique,
- une banque de données d'enregistrement (180) permettant l'enregistrement de participants à la monnaie cryptographique à l'aide de leurs numéros de téléphone respectifs, où les numéros de téléphone des participants enregistrés sont stockés dans la banque de données d'enregistrement (180), numéros auxquels sont respectivement associées des adresses cibles, et une multiplicité de mémoires tampons (182, 184, 214) de l'ordinateur serveur sont stockées dans une mémoire tampon (182, 214) associée au numéro de téléphone respectif,
où l'ordinateur serveur est conçu pour l'exécution des étapes suivantes :
d) la réception d'un message (202) du premier appareil de télécommunication mobile par le biais d'internet, où le message contient les premier et deuxième numéros de téléphone,
e) l'exécution d'une interrogation de banque de données de la banque de données d'enregistrement avec le deuxième numéro de téléphone servant de clé d'accès afin de vérifier si le deuxième participant est déjà enregistré,
f) dans le cas où le deuxième participant n'est pas enregistré :
i. l'envoi d'une adresse cible (204) de l'ordinateur serveur, par l'ordinateur serveur, au premier appareil de télécommunication mobile,
ii. la réception d'un message de transaction (206) par le premier appareil de télécommunication mobile, où le message de transaction contient le montant devant être viré et l'adresse cible de l'ordinateur serveur,
iii. après la validation du message de transaction par les nœuds de minage, l'envoi d'un message (210) de l'ordinateur serveur au deuxième appareil de télécommunication mobile par le biais d'une couche de signalisation du réseau de télécommunication mobile afin d'inciter le deuxième participant à s'enregistrer,
viii. la réception d'au moins une adresse cible (212) du deuxième appareil de télécommunication mobile par le deuxième appareil de télécommunication mobile,
ix. la création d'un nouveau message de transaction (216) par l'ordinateur serveur, où le nouveau message de transaction contient le montant et l'adresse cible du deuxième appareil de télécommunication mobile, et l'envoi du nouveau message de transaction par l'ordinateur serveur sous forme d'information aux nœuds par le biais d'internet,
d) dans le cas où le deuxième participant est déjà enregistré : l'envoi d'une adresse cible (220) du deuxième appareil de télécommunication mobile à partir de l'ordinateur serveur au premier appareil de télécommunication mobile, où l'ordinateur serveur a accès à l'adresse cible du deuxième appareil de télécommunication mobile à l'aide du deuxième numéro de téléphone servant de clé d'accès,
où l'ordinateur serveur est conçu de manière à ce que, dans l'étape c) vii., plusieurs adresses cibles pour le deuxième appareil de télécommunication mobile sont créées par le programme de portefeuille installé sur le deuxième appareil de télécommunication mobile, et les nombreuses adresses cibles sont envoyées à l'ordinateur serveur dans l'étape c) viii., où, en raison de la réponse au message envoyé dans l'étape c) v. de l'ordinateur serveur au deuxième appareil de télécommunication mobile, par l'envoi aux nombreuses adresses cibles du deuxième appareil de télécommunication mobile, un enregistrement du participant B a lieu par l'ordinateur serveur, ce pourquoi une entrée est créée dans la banque de données d'enregistrement avec le deuxième numéro de téléphone, que l'ordinateur serveur a reçu à partir du premier appareil de télécommunication mobile, où les nombreuses adresses cibles du deuxième appareil de télécommunication mobile sont stockées dans la mémoire tampon (214) associée au deuxième numéro de téléphone par l'ordinateur serveur, et sont associées à l'entrée créée pour le participant B dans la banque de données d'enregistrement, et où l'ordinateur serveur envoie un message (224) au deuxième appareil de télécommunication mobile dès que le nombre restant d'adresses cibles du deuxième appareil de télécommunication mobile est en-dessous d'une valeur limite prédéfinie dans la mémoire tampon (214) de l'ordinateur serveur associée au deuxième numéro de téléphone afin de demander des nouvelles adresses cibles du deuxième appareil de télécommunication mobile pour le remplissage de la mémoire tampon (214).

9. Ordinateur serveur selon la revendication 8, dans lequel la multiplicité de mémoires tampons (182, 184, 214) de l'ordinateur serveur présente une nouvelle mémoire tampon (184), pour le stockage de plusieurs parmi les adresses cibles de l'ordinateur serveur, et un générateur d'adresses (188), pour la génération d'adresses cibles de l'ordinateur serveur, où l'adresse cible de l'ordinateur serveur envoyée dans l'étape c) i. est effacée de la nouvelle mémoire tampon (184), et l'ordinateur serveur est conçu de manière à ce que la nouvelle mémoire tampon (184) soit remplie d'adresses cibles par le générateur d'adresses dès que le nombre restant d'adresses cibles dans la nouvelle mémoire tampon (184) est en-dessous d'une valeur limite prédéfinie.

10. Ordinateur serveur selon la revendication 8 ou la revendication 9, où l'ordinateur serveur est conçu de telle manière qu'avec l'envoi du message dans l'étape c) v., un temporisateur (198) est démarré par l'ordinateur serveur afin, dans le cas où aucune adresse cible (212) n'a été reçue par le deuxième appareil de télécommunication mobile avant la fin du temps du temporisateur, d'exécuter les étapes suivantes :
- la création d'un nouveau message de transaction (218) par l'ordinateur serveur, où le nouveau message de transaction contient le montant et l'adresse cible du premier appareil de télécommunication mobile,
- l'envoi du message de transaction par l'ordinateur serveur sous forme d'information aux nœuds par le biais d'internet,
- la validation du message de transaction par les nœuds de minage à l'aide de la chaîne de blocs.

11. Ordinateur serveur selon l'une des revendications 8 à 10, dans lequel, dans le cas du message (210) envoyé dans l'étape c) v., il s'agit d'un SMS ou d'un SMS binaire, qui contient un lien vers un App-Shop, par le biais duquel le programme de portefeuille peut être téléchargé sur le deuxième appareil de télécommunication mobile.

12. Système de traitement de données muni d'un système d'ordinateur serveur selon l'une des revendications 8 à 11 et d'au moins un premier et un deuxième appareil de télécommunication mobile.

13. Système de traitement de données selon la revendication 12 muni de plusieurs nœuds de minage.
